# EUROPEAN PATENT SPECIFICATION

(11) **EP 2 178 398 B1**
(45) Date of publication and mention of the grant of the patent: **13.11.2013**
(21) Application number: 08741874.5
(22) Date of filing: 30.04.2008
(51) Int. Cl.: A23L 1/015, A23L 1/217, A47J 37/12, A23L 1/164

(54) **DEFATTING APPARATUS FOR REDUCING THE FAT CONTENT OF DEEP- FRIED SNACK PRODUCTS AND METHOD FOR FACILITATING SUPPLY OF DEEP-FRIED SNACK PRODUCTS TO A DEFATTING APPARATUS**
ENTFETTUNGSGERÄT ZUM REDUZIEREN DES FETTGEHALTS VON FRITTIERTEN SNACK-PRODUKTEN UND VERFAHREN ZUM ERLEICHTERN DES ZUFÜHRENS VON FRITTIERTEN SNACK-PRODUKTEN AN EIN ENTFETTUNGSGERÄT
APPAREIL SERVANT À L'EXTRACTION DES MATIÈRES GRASSES EN VUE DE RÉDUIRE LA TENEUR EN MATIÈRES GRASSES DE PRODUITS FRITS DE TYPE AMUSE-GUEULE ET PROCÉDÉ FACILITANT L'ALIMENTATION D'UN APPAREIL SERVANT À L'EXTRACTION DES MATIÈRES GRASSES EN PRODUITS FRITS DE TYPE AMUSE-GUEULE

(30) Priority: 04.05.2007 SE 0701070
(43) Date of publication of application: 28.04.2010
(73) Proprietor: Rosenqvists Food Technologies AB, 291 97 Gärds Köpinge (SE)
(72) Inventor: ENROTH, Rolf, S-288 31 Vinslöv (SE); KALLING, Magnus, S-290 34 Fjälkinge (SE); HARALDSSON, Roland, S-295 32 Bromölla (SE)
(74) Representative: Axelsson, Boman
(86) International application number: PCT/SE2008/000301
(87) International publication number: WO 2008/136728

(56) References cited:
- GB-A- 1 519 049
- US-A- 3 346 391
- US-A- 5 137 740
- US-A- 5 171 600
- US-A- 5 947 010
- US-A1- 2006 088 633

## Description

### Field of the Invention

The present invention relates to a defatting apparatus for reducing the fat content of deep-fried snack products and a method for facilitating supply of deep-fried snack products through an inlet of a defatting apparatus for reducing their fat content by a flow of superheated steam.

### Background Art

In industrial production of deep-fried snack products, such as potato crisps, corn crisps and extruded snacks, heated fat and the snack products are supplied to a deep-frying vessel. The fat and the snack products are conveyed along the deep-frying vessel, after which the snack products are removed from the vessel by wire mesh belts, on which the fat is allowed to drain away from the snack products. When the snack products come into contact with the fat, the fat has a temperature of about 185°C. Due to the high temperature, an explosive evaporation occurs in the first part of the vessel, which results in the steam pressure in the snack products bursting the cell walls, whereby many open holes form in the snack products, which holes are filled with fat as the water in the snack products begins running short. The deep-fried snack products will therefore contain a large amount of fat.

It is thus desirable to reduce the amount of fat in the snack products to obtain products that are as low on fats as possible with preserved taste and an attractive appearance.

Applicant's patent SE 397 256 discloses a method and a device for producing deep-fried thin pieces of potato, referred to as crisps, with a lower fat content. This is achieved by the thin pieces of potato passing through zones in a fat bath where the temperature in a first zone equals or is lower than the temperature in a subsequent zone or zones. In this way the explosive evaporation of the potato pieces is prevented, and a steam pressure in the potato pieces exceeding the ambient air pressure is continuously kept. Thus the size of the fat-receiving holes in the potato pieces is reduced, thereby reducing the absorption of fat. The potato pieces are subsequently processed in what is referred to as a defatting apparatus. This involves processing with superheated steam which removes surface fat from the potato pieces, while at the same time keeping the temperature of the potato pieces. As a result, the penetration of the fat into the potato pieces is counteracted and made difficult.

The processing in the defatting apparatus means that a flow of superheated steam at a rate of about 8-12 m/s is circulated in a chamber toward the snack products for sucking out of excess fat. A slight overpressure relative to the ambient air pressure prevails in this chamber. This slight overpressure means that adjacent to the inlet of the chamber, through which the snack products are supplied to the defatting apparatus, a flow of superheated steam occurs out of the chamber, which flow thus is opposite to the conveying direction of the snack products.

This results in difficulties in processing of light-weight, frequently three-dimensional snack products, such as extruded snack products, since the superheated steam simply whirls up and blows away the snack products from the inlet of the defatting apparatus. This is prevented by reducing the flow rate of the superheated steam, which results in reduced efficiency.

US 5 947 010 discloses a de-oiling apparatus comprising a flow regulating device.

### Summary of the Invention

In view of that stated above, it is an object of the present invention to provide a defatting apparatus for reducing the fat content of deep-fried snack products and a method for facilitating supply of deep-fried snack products through an inlet of a defatting apparatus for reducing their fat content by a flow of superheated steam, said defatting apparatus and method solving or at least alleviating the above problems. A special object is to provide a defatting apparatus and a method in which the products can be introduced into the defatting apparatus without risking to be whirled up or blown out again through the inlet by a flow of superheated steam. Another object is to enable improved efficiency.

To achieve these objects, and also other objects that will appear from the following description, there is provided according to the present invention a defatting apparatus for reducing the fat content of deep-fried snack products, said defatting apparatus comprising a housing with an upper and a lower wall and side walls, a permeable conveyor belt for conveying said products through the housing between an inlet and an outlet arranged in the housing, an upper chamber arranged above the conveyor belt and a lower chamber arranged below the conveyor belt, and a fan for circulating superheated steam into the upper chamber toward and through the conveyor belt, to the lower chamber and back to the upper chamber through a return duct for sucking excess fat from said products. A flow regulating device arranged in the inlet comprises a throughflow plate which is movably arranged adjacent to the inlet above the conveyor belt, and which is arranged to regulate the flow of superheated steam toward the products by moving the throughflow plate in the longitudinal direction of the conveyor belt into and out of the inlet.

An advantage of the defatting apparatus according to the present invention is that the supply of the snack products through the inlet of the defatting apparatus is facilitated since the throughflow plate allows regulation of the flow of superheated steam adjacent to the inlet. The throughflow plate reduces the flow which is opposite to the conveying direction of the products through the inlet. It will thus be easier to defat also light-weight three-dimensional snack products by the flow being easily regulated and adjusted to the density and volume of the snack products that are to be supplied to the defatting apparatus. Since the blowing-out effect and whirling-up effect on the products out of the defatting apparatus, caused by the flow, are reduced, a higher flow rate of the superheated steam and, thus, a higher efficiency are allowed.

A further advantage is that the turbulence that inevitably occurs in the upper chamber adjacent to the inlet can be reduced and displaced into the chamber by the throughflow plate, which has been found to provide a favourable effect for reduction of the superheated steam that escapes out of the inlet, and the resulting whirling-up and/or blowing-out of the snack products.

The throughflow plate may comprise a plurality of through holes to form a hole pattern. The hole pattern allows distribution of the flow of superheated steam through the throughflow plate. Furthermore the flow of superheated steam opposite to the conveying direction of the products adjacent to the inlet can be reduced by the hole pattern.

The ratio of the total hole area and the area without holes of the hole pattern of the throughflow plate may decrease in the longitudinal direction of the conveyor belt toward the inlet. As a result, the flow of, but also the speed of, the superheated steam adjacent to the inlet can be further regulated and distributed in a desirable manner through the throughflow plate.

The throughflow plate may comprise fingers which extend into the upper chamber and which taper into the upper chamber seen from the inlet. This results in an effect corresponding to the one discussed above regarding a hole pattern with a decreasing ratio of the total hole area and the area without holes.

The flow regulating device arranged in the defatting apparatus may further comprise an angling plate with a first portion extending in the longitudinal direction of the conveyor belt, said angling plate being arranged in the inlet above said throughflow plate to form a gap between the angling plate and an upper surface of the inlet to allow a flow of superheated steam out of the inlet through said gap. Thus the flow of superheated steam adjacent to the inlet may be further regulated. Moreover the flow of superheated steam opposite to the conveying direction of the products may be further reduced so that the snack products are not whirled up and blown away from the inlet of the defatting apparatus. The gap allows that a certain amount of the flow of superheated steam can leave the defatting apparatus this way, whereby the gap can be compared to a safety valve.

The angling plate may further comprise a second portion which extends at an angle to the first portion toward the upper chamber and away from the conveyor belt. The second portion may be compared to a spoiler making it possible to regulate the flow of superheated steam so that a certain amount of the flow is directed out of the defatting apparatus through the gap. The use of the angling plate in combination with the throughflow plate has been found to allow such a reduction of the flow that no flow occurs out of the defatting apparatus on the underside of the angling plate. Consequently, the products do not encounter a flow opposite to the conveying direction of the products adjacent to the inlet, which facilitates the supply of the products.

The angling plate may be movably arranged in the longitudinal direction of the conveyor belt into and out of the inlet and be individually movable relative to the throughflow plate, thereby allowing improved possibilities of regulation.

The throughflow plate and the angling plate may be arranged to run on guides. This construction makes it easy to adjust the throughflow plate and the angling plate in the longitudinal direction of the conveyor belt.

The flow regulating device arranged in the defatting apparatus may further comprise a deflector plate arranged outside the housing and adapted to regulate said flow of superheated steam back through said inlet on the underside of the throughflow plate. By using a deflector plate it is thus possible to direct that amount of flow of superheated steam which leaves the inlet through the gap between the angling plate and the upper surface of the inlet back through the inlet. This flow may thus be used to blow in the snack products through the inlet of the defatting apparatus. As a result, this flow may be used to facilitate the supply of the products to the defatting apparatus through the inlet.

The deflector plate may be rotatable about its own longitudinal axis, which extends transversely to the longitudinal direction of the conveyor belt. This results in easy regulation of the direction of the flow, which is to be directed back to the inlet.

As a further possibility of regulation, the deflector plate may also be movable in the longitudinal direction of the conveyor belt.

The fan may be positioned in the lower chamber or alternatively in the return duct. This results in circulation of the superheated steam in the defatting apparatus from the upper chamber or alternatively the return duct to the upper chamber, through the products of the conveyor belt and back to the lower chamber.

A droplet separator may be arranged between the underside of the conveyor belt and the fan. In the droplet separator, the fat sucked out of the snack products is separated from the superheated steam. The fat may then be returned to a deep-frying vessel, if any, which allows reuse of the fat and thus reduction of the consumption of fat in the production of snack products.

A heat exchanger may be arranged between the fan and the upper side of the conveyor belt to provide the necessary heating of the superheated steam.

According to another aspect of the invention, a method is provided for facilitating supply of deep-fried snack products through an inlet of a defatting apparatus for reducing their fat content by a flow of superheated steam, said defatting apparatus comprising an inlet and an outlet between which said products are to be conveyed during defatting. The method comprises regulating, by a flow regulating device comprising a throughflow plate which is arranged adjacent to the inlet above the conveyor belt, the flow of superheated steam toward the products by moving the throughflow plate in the longitudinal direction of the conveyor belt into and out of the inlet.

An advantage of the method according to the present invention is that the supply of the snack products through the inlet of the defatting apparatus is facilitated since the throughflow plate allows regulation of the flow of superheated steam adjacent to the inlet. The throughflow plate reduces the flow which is opposite to the conveying direction of the products through the inlet. It will thus be easier to defat also light-weight three-dimensional snack products by the possibility of easily regulating the flow and adjusting it to the density and volume of the snack products that are to be supplied to the defatting apparatus. Since the blowing-out effect and whirling-up effect of the flow on the products out of the defatting apparatus are reduced, a higher flow rate of the superheated steam and, thus, a higher efficiency are allowed.

Another advantage is that the turbulence that inevitably occurs in the upper chamber adjacent to the inlet can be reduced and displaced into the chamber, which has been found to provide a favourable effect for reducing the flow of the superheated steam that escapes out of the inlet, and the resulting whirling-up and/or blowing-out of snack products.

Moreover the flow of the superheated steam toward the products adjacent to the inlet may be directed and regulated by a hole pattern of the throughflow plate. The hole pattern distributes the flow of superheated steam through the throughflow plate and reduces the flow of superheated steam opposite to the conveying direction of the products adjacent to the inlet.

An angling plate may produce a flow of superheated steam out of the inlet on the upper side of the angling plate, which flow is returned via a deflector plate to the inlet on the underside of the throughflow plate, to produce a blowing action in the conveying direction of the products to facilitate supply of the snack products through the inlet. As a result, a flow is allowed to pass out of the defatting apparatus without contacting the products, which allows elimination of the flow, opposite to the conveying direction of the products, which reaches the products. In this manner, the whirling-up effect and blowing-out effect on the products may be additionally reduced.

Said flow may be regulated by moving the angling plate in the longitudinal direction of the conveyor belt into and out of the inlet. Thus, the amount and the speed of the flow out through the gap and the inlet may be regulated.

The throughflow plate, the angling plate and the deflector plate may be individually movable. As a result, the plates may easily be adjusted relative to each other, which provides great possibilities of regulating the flow of superheated steam adjacent to the inlet according to the density and volume of the snack products involved.

According to a further aspect of the invention, a flow regulating device is provided to be used in a defatting apparatus for reducing the fat content of deep-fried snack products which are conveyed on a conveyor belt between an inlet and an outlet of said defatting apparatus, the reduction being arranged to the provided by a flow of superheated steam down to and through the conveyor belt. The flow regulating device comprises a throughflow plate which is movably arranged adjacent to the inlet above the conveyor belt, and which is arranged to regulate the flow of superheated steam toward the products by moving the throughflow plate in the longitudinal direction of the conveyor belt into and out of the inlet.

The ratio of the total hole area and the area without holes of the hole pattern of the throughflow plate may decrease in the longitudinal direction of the conveyor belt toward the inlet.

The throughflow plate may comprise fingers which extend into the upper chamber and which taper into the upper chamber seen from the inlet.

The flow regulating device may further comprise an angling plate with a first portion extending in the longitudinal direction of the conveyor belt, said angling plate being arranged in the inlet above said throughflow plate to form a gap between the angling plate and an upper surface of the inlet to allow a flow of superheated steam out of the inlet through the gap.

The angling plate may further comprise a second portion extending at an angle to the first portion toward the upper chamber and away from the conveyor belt.

The angling plate may be individually movable in the longitudinal direction of the conveyor belt into and out of the inlet and individually movable relative to said throughflow plate.

The throughflow plate and the angling plate may be arranged to run on guides.

The flow regulating device may further comprise a deflector plate arranged outside the housing and adapted to direct said flow of superheated steam back through said inlet on the underside of the throughflow plate.

The deflector plate may be rotatable about its own longitudinal axis, which extends transversely to the longitudinal direction of the conveyor belt.

The deflector plate may be movable in the longitudinal direction of the conveyor belt.

The inventive flow regulating device comprises substantially the components discussed above in connection with the defatting apparatus as such, thereby achieving the same effects and advantages, which will therefore not be discussed again.

### Brief Description of the Drawings

Embodiments of the present invention will now be described by way of example with reference to the accompanying drawings.
Fig. 1 is a schematic cross-sectional view, in a first direction, of a conventional defatting apparatus.
Fig. 2 shows the flow of superheated steam adjacent to an inlet of a conventional defatting apparatus in a cross-sectional view, seen in a second direction.
Fig. 3 is a schematic cross-sectional view, in a first direction, of a defatting apparatus comprising a flow regulating device according to the present invention.
Fig. 4 is a cross-sectional view, in a second direction, of the inventive flow regulating device arranged in the inlet of the defatting apparatus.
Fig. 5 is a perspective view of the inventive flow regulating device.
Fig. 6 is schematic view of a hole pattern of the inventive throughflow plate.
Fig. 7 is a schematic view of an alternative embodiment of the inventive throughflow plate comprising fingers.
Fig. 8 is a perspective view of a deflector plate according to the invention.
Fig. 9 illustrates the flow of superheated steam adjacent to an inlet of a defatting apparatus according to the present invention in a cross-sectional view, seen in a second direction.
Fig. 10 illustrates a simulation of the flow of superheated steam adjacent to an inlet of a conventional defatting apparatus.
Fig. 11 illustrates a simulation of the flow of superheated steam adjacent to an inlet of a defatting apparatus according to the present invention.

### Detailed Description

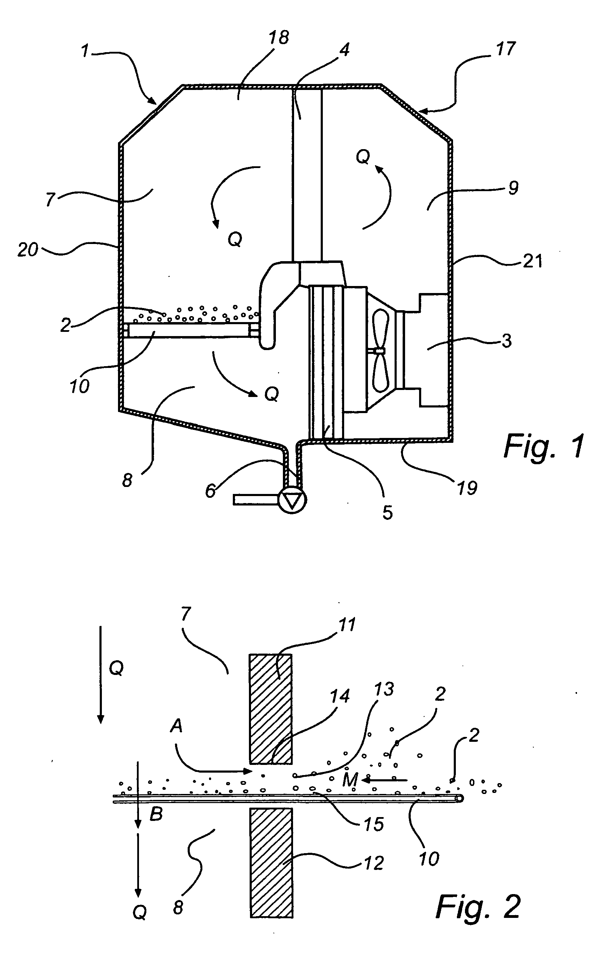

Fig. 1 is a cross-sectional view of a conventional defatting apparatus 1 according to Applicant's patent SE 397 256, comprising a housing 17 with an upper and a lower wall 18, 19 and surrounding side walls 20, 21. These walls provide an elongate shape to the housing 17. A permeable continuous conveyor belt 10 extends through the housing 17 to form an upper chamber 7 above the conveyor belt 10 and a lower chamber 8 below the conveyor belt 10. A return duct 9 extends parallel to and beside the upper and the lower chamber 7, 8. In the embodiment illustrated, a droplet separator 5 is arranged in a partition between the lower chamber 8 and the return duct 9, and a heat changer 4 is arranged in a partition between the return duct 9 and the upper chamber 7. Furthermore a fan 3 is arranged between the droplet separator 5 and the heat exchanger 4, which fan 3 in the shown embodiment is arranged with its suction side facing the droplet separator 5.

The conveyor belt 10 is arranged to run along a continuous path between an inlet and an outlet (not shown in Fig. 1) in the side walls of the housing. The conveyor belt 10 is permeable to allow a flow Q of superheated steam between the upper and the lower chamber 7, 8 and, thus, past the snack products 2 which are to be arranged on the conveyor belt 10.

In operation of the defatting apparatus 1, the fan 3 is adapted to circulate a flow Q of superheated steam which is heated in the heat exchanger 4 into the upper chamber 7, through the conveyor belt 10 and into the lower chamber 8, further through the droplet separator 5 and back to the heat exchanger 4. During this circulation, defatting occurs by excess fat being sucked out of the snack products 2 by the fan 3 when the superheated steam is drawn through the conveyor belt 10 and the snack products 2 arranged on the same. The fat sucked out of the products 2 is separated from the superheated steam in said droplet separator 5 and may then be recirculated to, for example, a deep-frying vessel (not shown) which is usually arranged directly on or close to the defatting apparatus 1. The recirculation of the separated fat occurs through a drain 6 shown in the lower wall 19.

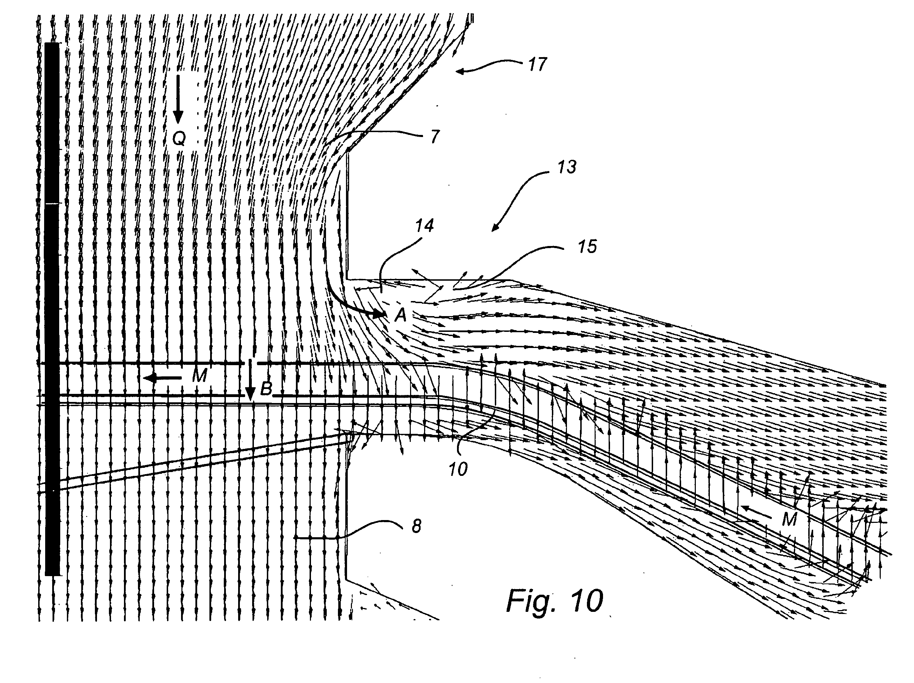

Reference is now made to Fig. 2 which schematically illustrates an inlet 13 in a defatting apparatus 1 according to prior art technique and the flow Q of superheated steam that occurs adjacent to the inlet 13. A simulation of the flow Q adjacent to the inlet of such a defatting apparatus is illustrated in Fig. 10. The inlet 13 is arranged in a side wall, not shown in Fig. 1. Figs 2 and 10 illustrate the conveyor belt 10 which is adapted to supply the snack products 2 to the defatting apparatus 1. The supply direction, and thus the conveying direction of the products, is illustrated by the arrow M.

When the snack products 2 are passed through the inlet 13, they encounter the flow Q of superheated steam. The flow Q has a speed in the range of 8-12 m/s. This flow Q is adjacent to the inlet 13 divided into mainly two partial flows, viz. partial flow A and partial flow B, where the partial flow B is conducted through the snack products 2 and the permeable conveyor belt 10 to the lower chamber 8 so as to be returned through the return duct 9 to the upper chamber 7 as stated above, while the partial flow A is allowed to leave the outer chamber 7 to reach the ambient atmosphere through the gap 15 which inevitably exists between the upper side of the conveyor belt 10 and an upper surface 14 of the inlet 13 in the side wall 11 of the housing. The partial flow A out of the upper chamber 7 takes place on the one hand because there is an opening out of the chamber 7 and, on the other, because there prevails a slight overpressure in the housing 17 relative to the ambient air pressure. As illustrated in Fig. 10, also a flow of superheated steam takes place out of the housing 17 on the underside of the conveyor belt 10.

The snack products 2 which are to be supplied to the defatting apparatus 1 through the inlet 13 and said gap 15 thus encounter, at the inlet 13, the partial flow A which is opposite to the conveying direction M of the products 2. As a result, the partial flow A whirls up the snack products 2 and tends to blow them away from the inlet 13 of the defatting apparatus 1 in a more or less uncontrolled manner, thus making the supply of the products and, thus, the defatting process difficult. In particular, this is a problem in the cases where the snack products 2 are light and have a three-dimensional geometry. The common solution to this problem is a reduction of the speed of the flow Q, which in turn means that the efficiency is reduced.

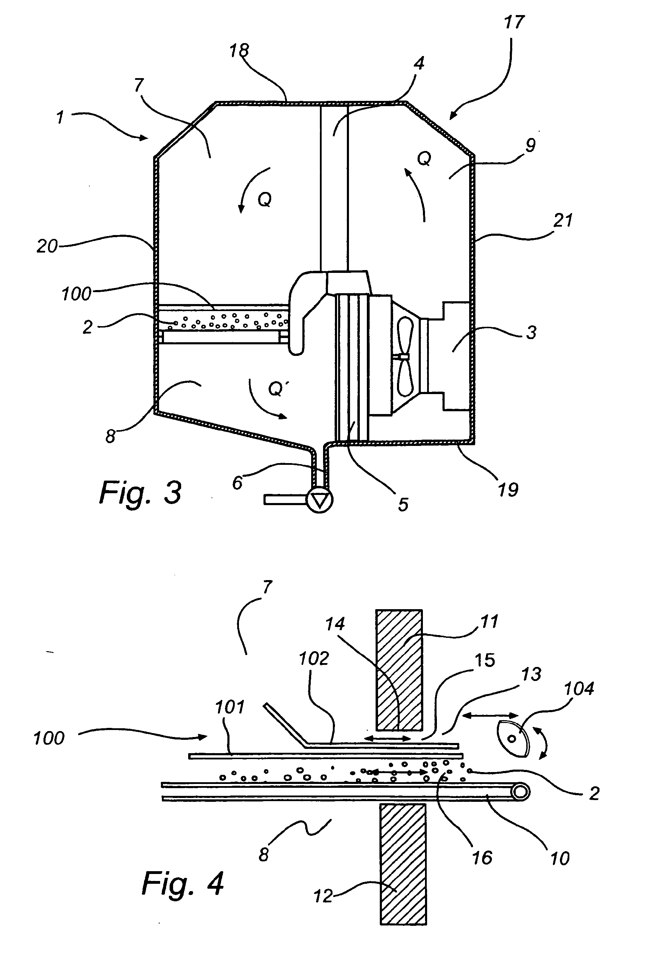

Reference is now made to Figs 3 and 4, which illustrate a defatting apparatus 1 with a flow regulating device 100 according to the present invention. The actual defatting apparatus 1 has the same basic construction as in prior art, and will therefore not be described again. The difference resides in the fact that the defatting apparatus 1 further comprises a flow regulating device 100 which is arranged adjacent to the inlet 13 of the defatting apparatus 1.

A first embodiment of the flow regulating device 100 and its components will in the following be described with reference to Figs 4-8. The flow regulating device 100 comprises a throughflow plate 101, an angling plate 102 and a deflector plate 104. The throughflow plate 101 and the angling plate 102 run on guides 105, which guides 105 directly or indirectly can be used for mounting of the flow regulating device 100 in the defatting apparatus 1 adjacent to the inlet 13 of the defatting apparatus 1 above the conveyor belt 10, as illustrated in Figs 3 and 4.

The throughflow plate 101 and the angling plate 102 are individually adjustable in the longitudinal direction of the conveyor belt 10 and can therefore be introduced different distances through the inlet 13 and, thus, into the upper chamber 7. The deflector plate 104 is arranged adjacent to the inlet 13 but outside the housing 17. The deflector plate 104 is rotatable about its own longitudinal axis 108 which extends transversely to the longitudinal direction of the conveyor belt 10. The deflector plate can also adjustable in the longitudinal direction of the conveyor belt 10. The various directions of adjustment are schematically illustrated by arrows in Fig. 4.

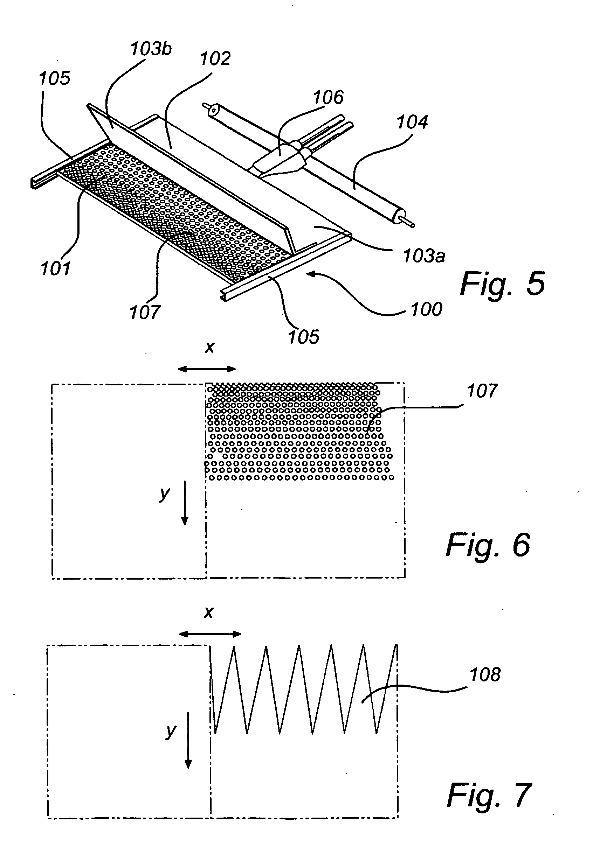

The throughflow plate 101 can be a plate or sheet of metal, plastic or some other material suitable for the food industry. The throughflow plate 101 can, in its simplest embodiment (not shown), be solid, that is not provided with holes. In the embodiment shown in Fig. 5, the throughflow plate 101 comprises a plurality of through holes 107 forming a hole pattern.

With reference to Fig. 6, a variant of a hole pattern is shown, in which the distance between the holes 107 in a row transversely to the longitudinal direction (direction X) of the conveyor belt 10 is constant while the distance between different rows increases for each row toward the inlet 13 (direct Y). Moreover the distance between the holes 107 in a row transversely to the longitudinal direction of the conveyor belt 10 may gradually increase between a first row and a second row seen toward the inlet 13 (direction Y). In the embodiment illustrated, the holes 107 have the same diameter and geometry. A corresponding effect can be obtained by the throughflow plate 101 having, instead of holes, fingers 108, see Fig. 7, whose free ends extend into the upper chamber 7 and which fingers 108 taper away from the inlet 13.

A suitable diameter of the holes 107 may be 10-15 mm. Instead of circular holes 107 as shown in Fig. 6, the holes 107 may be rectangular, square, triangular, elliptic or the like, or the throughflow plate 101 may comprise slots.

A common feature of the different types of hole patterns as discussed with reference to Figs 6 and 7 is that the ratio of the total hole area and the hole area without holes of the hole pattern of the throughflow plate 101 decreases toward the inlet 13 (direction Y).

It will also be appreciated that other hole patterns than those described above are conceivable, such as a constant spacing between the centres of the holes 107 or alternatively a random distribution of the holes.

With reference to Figs 3-5, the angling plate 102 can be a plate or sheet of metal, plastic or some other material that is suitable for the food industry. In the shown embodiment, the angling plate 102 comprises a first portion 103a and a second portion 103b. The first portion 103a extends in the longitudinal direction of the conveyor belt 10 and the second portion 103b extends at an angle to the first portion 103a toward the upper chamber 7 and away from the conveyor belt 10 when the angling plate 102 is arranged in the inlet 13. As shown, the second portion 103b can be plane, but may also, with its function maintained, have a different geometry, such as an arched geometry.

In an alternative embodiment not shown, the angling plate 102 comprises only the first portion 103a.

The deflector plate 104 which is shown in more detail in Figs 4, 5 and 8 can be a plate or sheet of metal, plastic or some other material that is convenient for use in the food industry. The deflector plate 104, which has an extent transversely to the longitudinal direction of the conveyor belt 10, has a geometry which is concavely arched toward the inlet 13.

The flow regulating device 100, see Fig. 4, is adapted to be mounted in the defatting apparatus 1 adjacent to the inlet 13 in such a manner that the throughflow plate 101 is arranged above the conveyor belt 10 but at such a distance from the conveyor belt 10 that the snack products 2 can pass between them without getting stuck between the conveyor belt 10 and the throughflow plate 101. The angling plate 102 is arranged at a distance from the upper surface 14 of the inlet 13 so that a gap 15 is formed between the angling plate 102 and the upper surface 14. Moreover the throughflow plate 101 and the angling plate 102 are advantageously arranged relative to each other in such a manner that the throughflow plate 102 extends further into the upper chamber 7 than does the angling plate 102. The throughflow plate 101 with its hole pattern is wholly or partly movable into the upper chamber 7 past the angling plate 102.

The throughflow plate 101 and the angling plate 102 are individually supported on guides 105 in such a manner that they can each separately be moved through the inlet 13 and into the chamber 7.

The deflector plate 104 is arranged outside the housing but adjacent to the inlet 13 and behind the throughflow plate 101 and the angling plate 102.

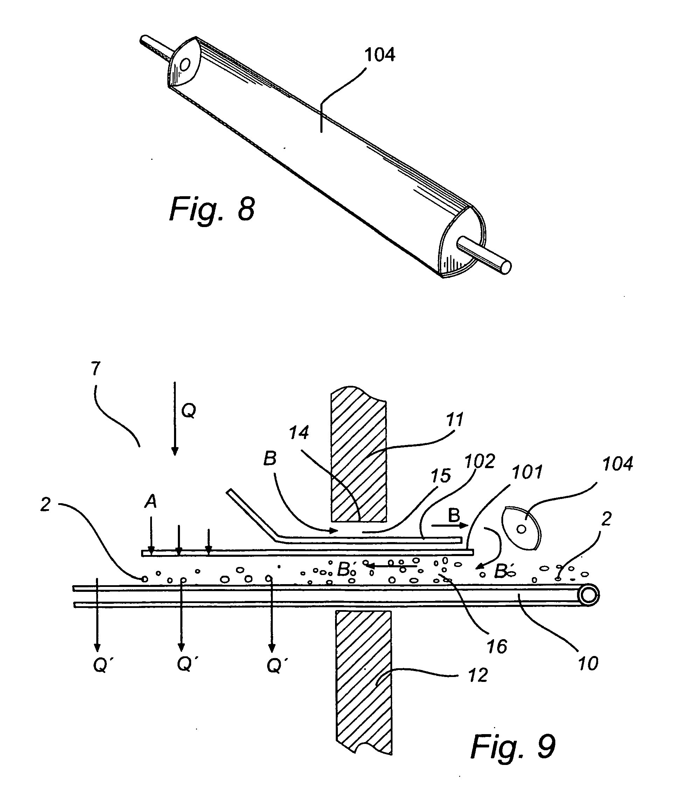

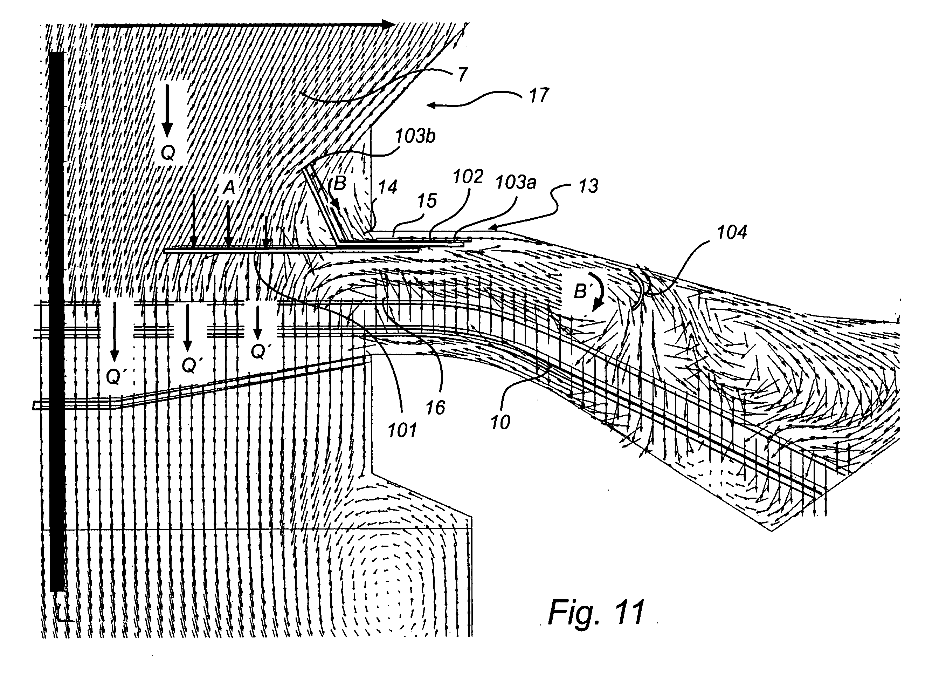

Now referring to Figs 3 and 9, the flow of superheated steam through a defatting apparatus 1 with the inventive flow regulating device 100 and, consequently, the method for facilitating supply of deep-fried snack products 2 through an inlet 13 of a defatting apparatus 1 will be described. Reference is also made to Fig. 11 which shows a simulation of the flow adjacent to the inlet 13 of the inventive defatting apparatus 1.

As the snack products 2 on the conveyor belt 10 are being inserted through the inlet 13, they encounter a flow Q of superheated steam. The flow Q has a speed in the range of 8-12 m/s and has previously been discussed with reference to Fig. 1.

With the above described embodiment of the flow regulating device 100 there occurs a division of the flow Q into mainly two partial flows A and B in the area of the flow regulating device 100.

When the flow Q impinges on the throughflow plate 101 and its area with holes there forms a partial flow A of superheated steam which passes through the snack products 2 and further through the permeable conveyor belt 10. The flow continuing through the conveying belt 10 is marked as Q' in Figs 9 and 11. The partial flow A is allowed by the throughflow plate 101 with its hole pattern extending further into the upper chamber 7 than does the angling plate 102. The hole pattern of the throughflow plate 101 thus allows the partial flow A to pass through the throughflow plate 101 and reach the products 2 on the conveyor belt 10. As a result of the hole pattern of the throughflow plate 101, which in the shown embodiment has a ratio of total hole area and area without holes which decreases in the longitudinal direction of the conveyor belt 10 toward the inlet 13, a flow is obtained, which seen perpendicular to the longitudinal direction of the conveyor belt 10 decreases toward the inlet 13. The decreasing flow through the throughflow plate 101 facilitates the supply of the products 2.

The second partial flow B is formed by the angling plate and occurs out of the upper chamber 7 through the gap 15 formed between the upper side of the angling plate 102 and the upper surface 14 of the inlet 13. The amount of the partial flow B can be regulated by the first 103a and a second portion 103b, if any, of the angling plate 102, which second portion functions as a spoiler which helps to direct part of the flow Q to form the partial flow B so that this passes out of the gap 15 instead of reaching the products 2 on the conveyor belt 10. Depending on how far the angling plate 102 is inserted into the upper chamber 7 and to what degree the angling plate 102 overlaps the throughflow plate 101 and its hole pattern, the amount of the partial flow B, but also of the partial flow A, can be regulated.

In accordance with the simulation shown in Fig. 11, the use of the angling plate 102 in combination with the throughflow plate 101 allows such a distribution of the partial flows A and B that all flow out of the defatting apparatus 1 through the inlet 13 occurs through the gap 15, that is between the upper side of the angling plate 102 and the upper surface 14. Thus there occurs no flow out of the defatting apparatus 1 in the gap 16 between the underside of the throughflow plate 101/the angling plate 102 and the upper side of the conveyor belt 10. As a result, the products supplied to the defatting apparatus 1 on the conveyor belt 10 will not be encountered by a flow of superheated steam which is opposite to the conveying direction M of the products. The result will thus be a reduction, or even an elimination, of whirling-up and blowing-out of the products 2 that are to be supplied.

Furthermore parts of the partial flow B can be returned by the deflector plate 104 to the defatting apparatus 1 in the form of a return partial flow B'. This occurs by the deflector plate 104 with its arched shape reflecting and recirculating the return partial flow B' to the defatting apparatus 1 through its inlet 13. More specifically, the recirculation of the return partial flow B' occurs through the gap 16 that is formed between the underside of the throughflow plate 101 and the upper side of the conveyor belt 10, that is through the gap 16 in which the snack products 2 are to be supplied to the defatting apparatus 1. By the deflector plate 104 being rotatable about its own longitudinal axis 108 and transversely to the longitudinal direction of the conveyor belt 10, the degree of recirculation of the return partial flow B' can be varied as required, that is depending on, for instance, the weight and the geometry of the snack products 2 and the speed of the flow Q that is used in the defatting apparatus 1. The return partial flow B' will, by the deflector plate 104, coincide with the conveying direction M of the snack products 2 and, thus, facilitates the supply of the snack products 2 by acting to "blow" in the products 2 through the inlet 13.

By moving the throughflow plate 101 and the angling plate 102 through the inlet 13 and into the upper chamber 7, the amount of the partial flows A and B may thus effectively be regulated to reduce the whirling-up effect and the blowing-out effect that are associated with the defatting apparatus 1 according to prior art technique and that have previously been discussed with reference to Figs 1 and 2.

Furthermore the turbulence that inevitably occurs around the inner ends of the throughflow plate 101 and the angling plate 102 can be displaced towards the upper chamber 7 of the defatting apparatus 1 depending on how far the two plates 101, 102 have been moved. This means that turbulence in the partial flows A and B can become weaker toward the inlet 13, which further facilitates the supply of the snack products 2 to the defatting apparatus 1.

Taken together, the flow regulating device 100 results in the blowing-out effect and the whirling-out effect being reduced compared to a defatting apparatus 1 according to prior art technique, which allows and facilitates supply of snack products 2, and particularly light-weight three-dimensional snack products 2, such as extruded products, to the defatting apparatus 1. By the different plates 101, 102, 104 being individually adjustable, the partial flows can easily be regulated due to the type of snack products 2 that is currently conveyed through the defatting apparatus 1. The reduction of the blowing-out effect and the whirling-up effect also means that the flow Q can be increased, whereby the defatting apparatus 1 allows a higher efficiency, such as a higher rate of production.

The partial flows can, by the throughflow plate in combination with the angling plate, be regulated to such a degree that all flow of superheated steam out of the defatting apparatus 1 through the inlet 13 can be made to occur in a gap 15 which is separated from the gap 16 through which the products 2 are to be supplied to the defatting apparatus 1, whereby the products 2 that are being supplied to the defatting apparatus 1 on the conveyor belt 10 will not be encountered by a flow of superheated steam that is opposite to the conveying direction M of the products 2. This results in a reduction, or even an elimination, of whirling-up and blowing-out of the products 2 that are to be supplied.

The reduction of the fat content of the snack products 2 in a defatting apparatus 1 according to the invention is dependent on the properties of the products 2 and to what degree absorption of fat of the products 2 could be prevented. Typical values of, for instance, crisps is a reduction of the fat content by 30-50 %.

Even if the flow regulating device 100 is here described using a throughflow plate 101, an angling plate 102 and a deflector plate 104, the desired effect (although not to the same extent) is achieved using the throughflow plate 101 only. This may be solid, that is without holes. The effect is intensified and improved, however, when the throughflow plate 101 is combined with the angling plate 102 and, still more, by using the deflector plate 104.

In the description above, a number of different geometries of holes and different hole patterns in the throughflow plate 101 have been described. It will be appreciated that these examples are in no way limiting.

In the embodiments illustrated above, the fan 3 is described to be connected with its suction side facing the lower chamber 8 to provide a suction effect that sucks out fat from the snack products 2. It will be appreciated that defatting by a flow regulating device 100 according to the invention is also applicable by blowing away fat from the snack products 2.

The defatting apparatus 1 can be a separate unit, or be arranged on or connected to a deep-frying vessel.

Several modifications and variations are consequently conceivable, and therefore the present invention is exclusively defined by the appended claims.

## Claims

1. A defatting apparatus (1) for reducing the fat content of deep-fried snack products, said defatting apparatus (1) comprising
a housing (17) with an upper and a lower wall (18, 19) and side walls (20, 21),
a permeable conveyor belt (10) for conveying said products (2) through the housing (17) between an inlet (13) and an outlet arranged in the housing (17),
an upper chamber (7) arranged above the conveyor belt (10) and a lower chamber (8) arranged below the conveyor belt (10), and
a fan (3) for circulating superheated steam into the upper chamber (7) toward and through the conveyor belt (10), to the lower chamber (8) and back to the upper chamber (7) through a return duct (9) for sucking out excess fat from said products (2),
**characterised by** a flow regulating device (100) arranged in the inlet (13) and comprising a throughflow plate (101) which is movably arranged adjacent to the inlet (13) above the conveyor belt (10), and which is arranged to regulate the flow of superheated steam toward the products (2) by moving the throughflow plate (101) in the longitudinal direction of the conveyor belt (10) into and out of the inlet (13).

2. A defatting apparatus (1) as claimed in claim 1, wherein said throughflow plate (101) comprises a plurality of through holes (107) to form a hole pattern.

3. A defatting apparatus (1) as claimed in claim 2, in which the ratio of the total hole area and the area without holes in the hole pattern of the throughflow plate (101) decreases in the longitudinal direction of the conveyor belt (10) toward the inlet (13).

4. A defatting apparatus (1) as claimed in claim 1, wherein said throughflow plate (101) comprises fingers (108) which extend into the upper chamber (7) and which taper into the upper chamber (7) seen from the inlet (13).

5. A defatting apparatus (1) as claimed in any one of claims 1-4, wherein the flow regulating device (100) further comprises an angling plate (102) with a first portion (1 03a) extending in the longitudinal direction of the conveyor belt (10),
said angling plate (102) being arranged in the inlet (13) above said throughflow plate (101) to form a gap (15) between the angling plate (102) and an upper surface (14) of the inlet (13) to allow a flow of superheated steam out of the inlet (13) through said gap (15).

6. A defatting apparatus (1) as claimed in claim 5, in which the angling plate (102) further comprises a second portion (1 03b) extending at angle to the first portion (1 03a) toward the upper chamber (7) and away from the conveyor belt (10).

7. A defatting apparatus (1) as claimed in claim 5 or 6, wherein the angling plate (102) is movably arranged in the longitudinal direction of the conveyor belt (10) into and out of the inlet (13) and is individually movable relative to said throughflow plate (101).

8. A defatting apparatus (1) as claimed in any one of claims 1-7, wherein the throughflow plate (101) and the angling plate (102) are arranged to run on guides (105).

9. A defatting apparatus (1) as claimed in any one of claims 1-8, wherein the flow regulating device (100) further comprises a deflector plate (104) arranged outside the housing (17) and adapted to regulate said flow of superheated steam back through said inlet (13) on the underside of the throughflow plate (101).

10. A defatting apparatus (1) as claimed in claim 9, wherein the deflector plate (104) is rotatable about its own longitudinal axis (108), which extends transversely to the longitudinal direction of the conveyor belt (10).

11. A defatting apparatus (1) as claimed in claim 9 or 10, wherein the deflector plate (104) is movable in the longitudinal direction of the conveyor belt (10).

12. A defatting apparatus (1) as claimed in any one of claims 1-11, wherein the fan (3) is positioned in the lower chamber (8) or alternatively in the return duct (9).

13. A defatting apparatus (1) as claimed in any one of claims 1-12, wherein a droplet separator (5) is arranged between the underside of the conveyor belt (10) and the fan (3).

14. A defatting apparatus (1) as claimed in any one of claims 1-13, wherein a heat exchanger (4) is arranged between the fan (3) and the upper side of the conveyor belt (10).

15. A method for facilitating supply of deep-fried snack products (2) through an inlet (13) of a defatting apparatus (1) for reducing their fat content by a flow of superheated steam,
said defatting apparatus (1) comprising an inlet (13) and an outlet between which said products (2) are to be conveyed during defatting, **characterised by**
regulating, by a flow regulating device (100) comprising a throughflow plate (101) which is arranged adjacent to the inlet (13) above the conveyor belt (10), the flow of superheated steam toward the products (2) by moving the throughflow plate (101) in the longitudinal direction of the conveyor belt (10) into and out of the inlet (13).

16. A method as claimed in claim 15, in which the flow of superheated steam toward the products (2) adjacent to the inlet (13) is regulated by a hole pattern of the throughflow plate (101).

17. A method as claimed in claim 15 or 16, in which an angling plate (102) produces a flow of superheated steam out of the inlet (13) on the upper side of the angling plate (102), which flow is returned via a deflector plate (104) to the inlet (13) on the underside of the throughflow plate (101), to produce a blowing action in the conveying direction of the products (2) to facilitate supply of the snack products (2) through the inlet (13).

18. A method as claimed in any one of claims 15-17, wherein said partial flow is regulated by moving the angling plate (102) in the longitudinal direction of the conveyor belt (10) into and out of the inlet (13).

19. A method as claimed in any one of claims 15-17, in which the throughflow plate (101), the angling plate (102) and the deflector plate (104) are individually movable.

## Patentansprüche

1. Entfettungsgerät (1) zum Reduzieren des Fettgehalts von Snack-Produkten, wobei das Entfettungsgerät (1) ein Gehäuse (17) mit einer oberen und einer unteren Wand (18, 19) sowie Seitenwänden (20, 21), ein durchlässiges Förderband (10) zur Förderung der Produkte (2) durch das Gehäuse (17) zwischen einem Einlass (13) und einem Auslass, die im Gehäuse (17) vorgesehen sind, eine oberhalb des Förderbands (10) angeordnete obere Kammer (7) und eine unterhalb des Förderbands (10) angeordnete untere Kammer (8) und ein Gebläse (3) aufweist, um überhitzten Dampf in die obere Kammer (7) in Richtung und durch das Förderband (10) zur unteren Kammer (8) und zurück zur oberen Kammer (7) durch eine Rückführleitung (9) zu zirkulieren, um überschüssiges Fett aus den Produkten (2) zu saugen,
**dadurch gekennzeichnet, dass** eine im Einlass (13) angeordnete Strömungssteuerungseinrichtung (100) vorgesehen ist, die eine Durchströmplatte (101) aufweist, die benachbart zum Einlass (13) oberhalb des Förderbands (10) beweglich angeordnet ist und dazu dient, den Strom überhitzten Dampfs in Richtung der Produkte (2) durch Bewegen der Durchströmplatte (101) in Längsrichtung des Förderbands (10) in und aus dem Einlass (13) einzustellen.

2. Entfettungsgerät (1) nach Anspruch 1, wobei die Durchströmplatte (101) zur Bildung eines Lochmusters eine Vielzahl von Durchgangslöchern (107) aufweist.

3. Entfettungsgerät (1) nach Anspruch 2, bei der das Verhältnis Gesamtlochfläche zur Fläche ohne Löcher des Lochmusters der Durchströmplatte (101) in Längsrichtung des Förderbands (10) zum Einlass (13) hin abnimmt.

4. Entfettungsgerät (1) nach Anspruch 1, wobei die Durchströmplatte (101) Finger (108) aufweist, die in die obere Kammer (7) vorstehen und die sich ausgehend vom Einlass zur oberen Kammer (7) verjüngen.

5. Entfettungsgerät (1) nach einem der Ansprüche 1 bis 4, wobei die Strömungssteuerungseinrichtung (100) ferner eine Winkelplatte (102) umfasst, die einen ersten Bereich (103a) aufweist, der sich in Längsrichtung des Förderbands (10) erstreckt, wobei die Winkelplatte (102) im Einlass oberhalb der Durchströmplatte (101) derart angeordnet ist, dass ein Schlitz (15) zwischen der Winkelplatte (102) und einer oberen Fläche (14) des Einlasses (13) gebildet ist, um einen Strom überhitzten Dampfs aus dem Einlass (13) durch den Schlitz (15) zu ermöglichen.

6. Entfettungsgerät (1) nach Anspruch 5, bei dem die Winkelplatte (102) ferner einen zweiten Bereich (103b) aufweist, der sich abgewinkelt zum ersten Bereich (103a) vom Förderband (10) weg in Richtung der oberen Kammer (7) erstreckt.

7. Entfettungsgerät (1) nach Anspruch 5 oder 6, wobei die Winkelplatte (102) in Längsrichtung des Förderbands in und aus dem Einlass (13) bewegbar angeordnet ist und einzeln relativ zur Durchströmplatte (101) bewegt werden kann.

8. Entfettungsgerät (1) nach einem der Ansprüche 1 bis 7, wobei die Durchströmplatte (101) und die Winkelplatte (102) derart angeordnet sind, dass sie auf Führungen (105) laufen.

9. Entfettungsgerät (1) nach einem der Ansprüche 1 bis 8, wobei die Strömungssteuerungseinrichtung (100) ferner eine Ablenkplatte (104) aufweist, die außerhalb des Gehäuses (17) angeordnet ist und dazu geeignet ist, den Strom des überhitzten Dampfs an der Unterseite der Durchströmplatte (101) zurück durch den Einlass (13) zu lenken.

10. Entfettungsgerät (1) nach Anspruch 9, wobei die Ablenkplatte (104) um ihre eigene Längsachse (108), die sich quer zur Längsrichtung des Förderbands (10) erstreckt, drehbar ist.

11. Entfettungsgerät (1) nach Anspruch 9 oder 10, wobei die Ablenkplatte (104) in Längsrichtung des Förderbands (10) bewegt werden kann.

12. Entfettungsgerät (1) nach einem der Ansprüche 1 bis 11, wobei das Gebläse (3) in der unteren Kammer (8) oder alternativ in der Rückführleitung (9) angeordnet ist.

13. Entfettungsgerät (1) nach einem der Ansprüche 1 bis 12, wobei ein Tropfenabscheider (5) zwischen der Unterseite des Förderbands (10) und dem Gebläse (3) angeordnet ist.

14. Entfettungsgerät (1) nach einem der Ansprüche 1 bis 13, wobei ein Wärmetauscher (4) zwischen dem Gebläse (3) und der Oberseite des Förderbands (10) angeordnet ist.

15. Verfahren zur Vereinfachung der Zufuhr frittierter Snack-Produkte (2) durch einen Einlass (13) eines Entfettungsgeräts (1) zur Reduzierung des Fettgehalts der Produkte (2) durch einen Strom überhitzten Dampfs, wobei das Entfettungsgerät (1) einen Einlass (13) und einen Auslass aufweist, zwischen denen die Produkte (2) während der Entfettung gefördert werden,
**dadurch gekennzeichnet,**
**dass**, unter Verwendung einer Strömungssteuerungseinrichtung (100) mit einer Durchströmplatte (101), die benachbart zum Einlass (13) oberhalb des Förderbands (10) angeordnet ist, der Strom überhitzten Dampfs in Richtung der Produkte (2) eingestellt wird, indem die Durchströmplatte (101) in Längsrichtung des Förderbands (10) in und aus dem Einlass (13) bewegt wird.

16. Verfahren nach Anspruch 15, bei dem der Strom überhitzten Dampfs in Richtung der Produkte (2) benachbart zum Einlass (13) durch ein Lochmuster der Durchströmplatte (101) eingestellt wird.

17. Verfahren nach Anspruch 15 oder 16, bei dem eine Winkelplatte (102) einen Strom überhitzten Dampfs aus dem Einlass (13) an der Oberseite der Winkelplatte (102) erzeugt, wobei der Strom durch eine Ablenkplatte (104) zum Einlass (13) an der Unterseite der Durchströmplatte (101) zurückgeleitet wird, um eine Blaswirkung in Förderrichtung der Produkte (2) zu erzielen, um die Zufuhr der Snack-Produkte (2) durch den Einlass (13) zu erleichtern.

18. Verfahren nach einem der Ansprüche 15 bis 17, wobei der Teilstrom durch Bewegen der Winkelplatte (102) in Längsrichtung des Förderbands (10) in und aus dem Einlass (13) eingestellt wird.

19. Verfahren nach einem der Ansprüche 15 bis 17, in welchem die Durchströmplatte (101), die Winkelplatte (102) und die Ablenkungsplatte (104) einzeln bewegt werden können.

## Revendications

1. Appareil de dégraissage (1) destiné à réduire la teneur en graisses de produits frits de type amuse-gueule, ledit appareil de dégraissage (1) comprenant
un boîtier (17) muni d'une paroi supérieure et d'une paroi inférieure (18, 19) et de parois latérales (20, 21),
une bande transporteuse perméable (10) destinée à transporter lesdits produits (2) au sein dudit boîtier (17) entre une entrée (13) et une sortie disposées dans ledit boîtier (17),
une chambre supérieure (7) disposée au-dessus de ladite bande transporteuse (10) et une chambre inférieure (8) disposée sous ladite bande transporteuse (10), et
un ventilateur (3) destiné à faire circuler de la vapeur surchauffée vers ladite chambre supérieure (7), en direction de et à travers ladite bande transporteuse (10), vers ladite chambre inférieure (8) et à nouveau vers ladite chambre supérieure (7) par le biais d'une conduite de retour (9) destinée à aspirer l'excédent de graisse desdits produits (2),
**caractérisé par** un dispositif de régulation du débit (100) disposé dans ladite entrée (13) et comprenant une plaque de débit (101) disposée de manière mobile et adjacente à ladite entrée (13), au-dessus de ladite bande transporteuse (10), et prévu pour réguler le débit de ladite vapeur surchauffée vers lesdits produits (2) en déplaçant ladite plaque de débit (101) dans la direction longitudinale de ladite bande transporteuse (10) vers et en-dehors de ladite entrée (13).

2. Appareil de dégraissage (1) selon la revendication 1, dans lequel ladite plaque de débit (101) comprend une pluralité de trous traversants (107) afin de former un ensemble de trous.

3. Appareil de dégraissage (1) selon la revendication 2, dans lequel le rapport entre la surface totale desdits trous et la surface dépourvue de trous au sein dudit ensemble de trous de ladite plaque de débit (101) diminue dans la direction longitudinale de ladite bande transporteuse (10), vers ladite entrée (13).

4. Appareil de dégraissage (1) selon la revendication 1, dans lequel ladite plaque de débit (101) comprend des extensions (108) qui s'étendent dans ladite chambre supérieure (7) et qui s'effilent vers ladite chambre supérieure (7), lorsque l'on regarde depuis ladite entrée (13).

5. Appareil de dégraissage (1) selon l'une quelconque des revendications 1 à 4, dans lequel ledit dispositif de régulation du débit (100) comprend en outre une plaque de déviation (102) munie d'une première partie (103a) qui s'étend dans la direction longitudinale de ladite bande transporteuse (10),
ladite plaque de déviation (102) étant disposée dans ladite entrée (13), au-dessus de ladite plaque de débit (101), afin de former un espace (15) entre ladite plaque de déviation (102) et une surface supérieure (14) de ladite entrée (13), de façon à permettre l'écoulement de ladite vapeur surchauffée en-dehors de ladite entrée (13), par le biais dudit espace (15).

6. Appareil de dégraissage (1) selon la revendication 5, dans lequel ladite plaque de déviation (102) comprend en outre une seconde partie (103b) qui s'étend à un certain angle par rapport à ladite première partie (103a), vers ladite chambre supérieure (7) et à l'écart de ladite bande transporteuse (10).

7. Appareil de dégraissage (1) selon la revendication 5 ou 6, dans lequel ladite plaque de déviation (102) est disposée de manière mobile dans la direction longitudinale de ladite bande transporteuse (10), vers et en-dehors de ladite entrée (13), et est mobile individuellement par rapport à ladite plaque de débit (101).

8. Appareil de dégraissage (1) selon l'une quelconque des revendications 1 à 7, dans lequel ladite plaque de débit (101) et ladite plaque de déviation (102) sont disposées sur des guides (105).

9. Appareil de dégraissage (1) selon l'une quelconque des revendications 1 à 8, dans lequel ledit dispositif de régulation du débit (100) comprend en outre une plaque déflectrice (104) disposée à l'extérieur dudit boîtier (17) et adaptée pour réguler ledit débit de ladite vapeur surchauffée dans ladite entrée (13), sur le dessous de ladite plaque de débit (101).

10. Appareil de dégraissage (1) selon la revendication 9, dans lequel ladite plaque déflectrice (104) peut tourner autour de son propre axe longitudinal (108), qui s'étend de manière transversale par rapport à la direction longitudinale de ladite bande transporteuse (10).

11. Appareil de dégraissage (1) selon la revendication 9 ou 10, dans lequel ladite plaque déflectrice (104) est mobile dans la direction longitudinale de ladite bande transporteuse (10).

12. Appareil de dégraissage (1) selon l'une quelconque des revendications 1 à 11, dans lequel ledit ventilateur (3) est positionné dans ladite chambre inférieure (8) ou dans ladite conduite de retour (9).

13. Appareil de dégraissage (1) selon l'une quelconque des revendications 1 à 12, dans lequel un séparateur de gouttelettes (5) est disposé entre le dessous de ladite bande transporteuse (10) et ledit ventilateur (3).

14. Appareil de dégraissage (1) selon l'une quelconque des revendications 1 à 13, dans lequel un échangeur thermique (4) est disposé entre ledit ventilateur (3) et la face supérieure de ladite bande transporteuse (10).

15. Procédé de facilitation de l'approvisionnement en produits frits de type amuse-gueule (2) par le biais d'une entrée (13) d'un appareil de dégraissage (1) destiné à réduire la teneur en graisses à l'aide d'un flux de vapeur surchauffée,
ledit appareil de dégraissage (1) comprenant une entrée (13) et une sortie entre lesquelles lesdits produits (2) doivent être transportés pendant le dégraissage, **caractérisé par**
la régulation, à l'aide d'un dispositif de régulation du débit (100) qui comprend une plaque de débit (101) disposée de manière adjacente à ladite entrée (13), au-dessus de ladite bande transporteuse (10), du débit de ladite vapeur surchauffée vers lesdits produits (2), en déplaçant ladite plaque de débit (101) dans la direction longitudinale de ladite bande transporteuse (10), vers et en-dehors de ladite entrée (13).

16. Procédé selon la revendication 15, dans lequel le débit de ladite vapeur surchauffée vers lesdits produits (2) adjacents à ladite entrée (13) est régulé par un ensemble de trous de ladite plaque de débit (101).

17. Procédé selon la revendication 15 ou 16, dans lequel une plaque de déviation (102) produit un écoulement de vapeur surchauffée en-dehors de ladite entrée (13), sur la face supérieure de ladite plaque de déviation (102), ledit écoulement étant renvoyé via une plaque déflectrice (104) vers ladite entrée (13), sur le dessous de ladite plaque de débit (101), afin de produire une action de soufflage dans la direction de transport desdits produits (2), de façon à faciliter l'approvisionnement desdits produits de type amuse-gueule (2) au niveau de ladite entrée (13).

18. Procédé selon l'une quelconque des revendications 15 à 17, dans lequel ledit écoulement partiel est régulé en déplaçant ladite plaque de déviation (102) dans la direction longitudinale de ladite bande transporteuse (10) vers et en-dehors de ladite entrée (13).

19. Procédé selon l'une quelconque des revendications 15 à 17, dans lequel ladite plaque de débit (101), ladite plaque de déviation (102) et ladite plaque déflectrice (104) sont mobiles individuellement.
